# EUROPEAN PATENT APPLICATION

(11) **EP 3 883 091 A1**
(43) Date of publication of application: **22.09.2021**
(21) Application number: 19885641.1
(22) Date of filing: 18.10.2019
(51) Int. Cl.: H02K 1/18, F04B 39/00, H02K 1/16, H02K 15/02

(54) **MOTOR, COMPRESSOR, AND MOTOR MANUFACTURING METHOD**

(30) Priority: 16.11.2018 JP 2018215606
(71) Applicant: Panasonic Intellectual Property Management Co., Ltd., Osaka-shi, Osaka 540-6207 (JP)
(72) Inventor: NISHIKAWA, Yukio, Osaka-shi, Osaka 540-6207 (JP); SAITOH, Mitsuo, Osaka-shi, Osaka 540-6207 (JP)
(74) Representative: Vigand, Philippe
(86) International application number: PCT/JP2019/041144
(87) International publication number: WO 2020/100527

(57) **Abstract**

A motor includes: a stator (1) that includes a laminated group (3) of soft magnetic alloy strips that are laminated and is fastened to a base (11) by a bolt (14) that penetrates the laminated group (3) in a direction of laminating the soft magnetic alloy strips; and a rotor that is rotatably installed on the base (11). A resin layer (20) is provided at least on a laminated end surface closest to the bolt (14), in the laminated end surface of the stator (1).

## Description

### TECHNICAL FIELD

The present disclosure relates to a motor, a compressor, and a motor manufacturing method.

### BACKGROUND ART

In the related art, pure iron or electromagnetic steel sheet is generally used for a stator of a motor. In the motor for the purpose of improving efficiency, a stator core is configured of strips containing amorphous or nanocrystal grains (for example, refer to Patent Literature 1).

The stator core of Patent Literature 1 is manufactured by the following steps.

First, an amorphous alloy strip produced by a liquid quenching method such as a single roll method or a double roll method is processed into a predetermined shape by winding, cutting, punching, etching or the like.

Next, in order to improve the soft magnetic properties of the alloy strips, the amorphous alloy strips are heat-treated and crystallized. Accordingly, soft magnetic alloy strips containing nanocrystal grains are produced.

Next, a plurality of soft magnetic alloy strips are laminated to produce a stator core. At this time, the stator core is bonded or molded with resin.

The stator core produced by the above-described steps is used for a motor.

### Citation List

### Patent Literature

PTL 1: Japanese Patent Unexamined Publication No. 6-145917

### SUMMARY OF THE INVENTION

However, the motor that uses the stator core of Patent Literature 1 has a problem that the space factor becomes small and the efficiency of the motor becomes poor because the resin or the adhesive enters between layers of the alloy strips from the side surface.

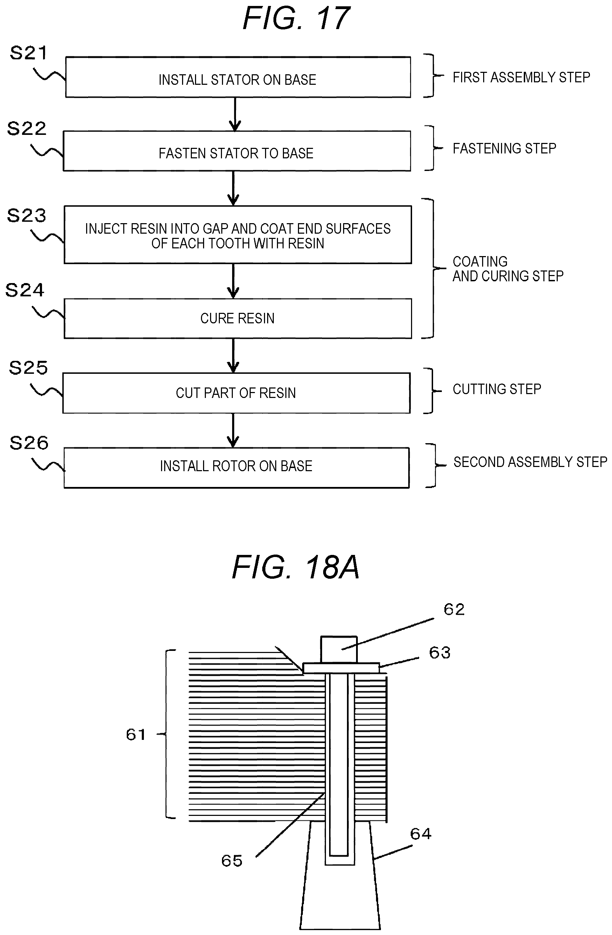

In order to increase the space factor, a laminated body of only soft magnetic alloy strips may be firmly fastened with bolts. However, there is a problem in this case. Hereinafter, this problem will be described in detail with reference to FIGS. 18A to 18C.

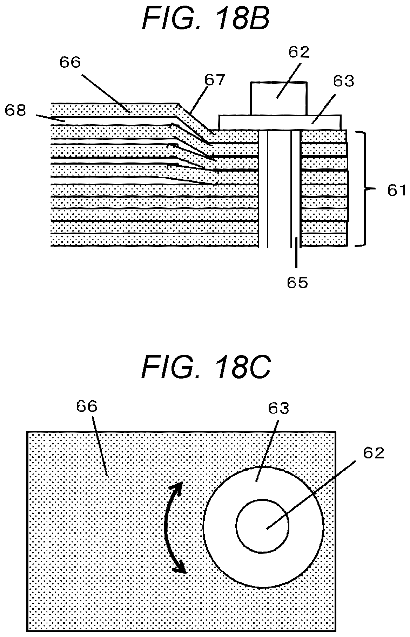

FIGS. 18A to 18C illustrate the vicinity of a fastener of the laminated body of soft magnetic alloy strips. FIG. 18A is a sectional view of the vicinity of the fastener. FIG. 18B is a partially enlarged sectional view of the vicinity of the fastener illustrated in FIG. 18A. FIG. 18C is a top view of the vicinity of the fastener illustrated in FIG. 18B. The fastener means, for example, a part provided with a bolt or the like (hereinafter, the same will be applied).

As illustrated in FIG. 18A, laminated group 61 of soft magnetic alloy strips is fixed by bolt 62. Bolt 62 is fastened to the leg of base 64 passing through washer 63 and through-hole 65.

As illustrated in FIG. 18B, after fastening bolt 62, soft magnetic alloy strip 66 basically adheres tightly without a gap in a laminating direction (up-down direction in the drawing), and becomes in a compressed state. However, in a place where washer 63 is not restrained, soft magnetic alloy strip 66 has low rigidity and therefore tends to form gap 68 and to widen. At this time, deformed part 67 is generated in soft magnetic alloy strip 66 around washer 63. The swelling caused by deformed part 67 becomes larger toward the upper and lower ends of laminated group 61 of soft magnetic alloy strips in the laminating direction.

As illustrated in FIG. 18C, the rotational force of washer 63 when bolt 62 is fastened causes twisting of soft magnetic alloy strip 66 in the direction of the arrow in the drawing.

When the degree of swelling or twisting described above exceeds the limit of breakage of soft magnetic alloy strip 66, a damage such as breakage occurs in soft magnetic alloy strip 66. Since the swelling or twisting is greatest in the vicinity of the fastener (bolt 62), a damage easily occurs in the vicinity of the fastener. When a damage occurs, a magnetic path during driving becomes discontinuous, unlike the design. As a result, the magnetic characteristics deteriorate. Furthermore, debris (for example, fragments or powder) generated by the damage enters a rotating part, which impairs the driving of the motor and deteriorates the characteristics of the motor. In a compressor equipped with such a motor, the above-described debris clogs the capillaries such as an expansion valve, and the refrigerating capacity of the compressor is lowered.

An object of one aspect of the present disclosure is to provide a motor, a compressor, and a motor manufacturing method that can secure the characteristics and reliability of the motor.

According to an aspect of the present disclosure, there is provided a motor including: a stator that includes a laminated group of soft magnetic alloy strips that are laminated and is fastened to a base by a fastening mechanism that penetrates the laminated group in a direction of laminating the soft magnetic alloy strips; a rotor that is rotatably installed on the base; and a resin layer provided at least on a laminated end surface closest to the fastening mechanism, in the laminated end surface of the stator.

According to another aspect of the present disclosure, there is provided a compressor including: the motor according to the aspect of the present disclosure.

According to still another aspect of the present disclosure, there is provided a motor manufacturing method including: a fastening step of fastening a stator including a laminated group of soft magnetic alloy strips that are laminated to a base; and a first coating and curing step of coating a laminated end surface of the stator with a resin and curing the resin.

### ADVANTAGEOUS EFFECTS OF INVENTION

According to the present disclosure, the characteristics and reliability of the motor can be secured.

### BRIEF DESCRIPTION OF DRAWINGS

FIG. 1A is a side view of a stator according to a first exemplary embodiment.
FIG. 1B is a side view of the stator according to the first exemplary embodiment.
FIG. 1C is a top view of FIG. 1A.
FIG. 2 is a side view illustrating a state where a rotor according to the first exemplary embodiment is attached to a base.
FIG. 3 is a side view illustrating a state where the stator and the rotor according to the first exemplary embodiment are attached to the base.
FIG. 4 is a side view illustrating a state where the stator according to the first exemplary embodiment is fastened to the base.
FIG. 5A is a side view of a step of coating a laminated end surface of the stator according to the first exemplary embodiment with a resin.
FIG. 5B is a top view of FIG. 5A.
FIG. 5C is a plan view of the stator according to the first exemplary embodiment.
FIG. 6 is a flow chart illustrating an example of a motor manufacturing method according to the first exemplary embodiment.
FIG. 7 is a schematic sectional view of the vicinity of a terminal block of the stator according to the first exemplary embodiment in which a resin layer is formed.
FIG. 8 is a schematic sectional view of the vicinity of a fastener of the stator according to the first exemplary embodiment in which the resin layer is formed.
FIG. 9A is a side view of a stator according to a second exemplary embodiment.
FIG. 9B is a top view of FIG. 9A.
FIG. 10A is a top view of the stator according to the second exemplary embodiment in which a resin layer is formed on an end surface of a tooth.
FIG. 10B is a side view seen in the direction of an arrow from position A of FIG. 10A.
FIG. 10C is a plan view illustrating a state where the resin layer of FIG. 10A is cut.
FIG. 10D is a side view after the resin layer of FIG. 10B is cut.
FIG. 11 is a flow chart illustrating an example of a stator manufacturing method according to the second exemplary embodiment.
FIG. 12A is a side view of a stator according to a third exemplary embodiment.
FIG. 12B is a top view of FIG. 12A.
FIG. 13A is a side view of the stator according to the third exemplary embodiment, which is fastened to a base.
FIG. 13B is a top view of FIG. 13A.
FIG. 14A is a side view in a step of coating a laminated end surface of the stator according to the third exemplary embodiment with a resin.
FIG. 14B is a top view of FIG. 14A.
FIG. 15A is a side view of the stator according to the third exemplary embodiment after the resin is cured.
FIG. 15B is a top view of FIG. 15A.
FIG. 16A is a side view of a motor according to the third exemplary embodiment.
FIG. 16B is a top view of FIG. 16A.
FIG. 17 is a flow chart illustrating an example of a motor manufacturing method according to the third exemplary embodiment.
FIG. 18A is a sectional view of the vicinity of a fastener of a laminated body of soft magnetic alloy strips in the related art.
FIG. 18B is a partially enlarged sectional view of FIG. 18A.
FIG. 18C is a top view of FIG. 18B.

### DESCRIPTION OF EMBODIMENTS

Hereinafter, each embodiment of the present disclosure will be described with reference to the drawings. In each drawing, common configuration elements will be given the same reference numerals, and the description thereof will be appropriately omitted.

### (First Exemplary Embodiment)

A first exemplary embodiment according to the present disclosure will be described.

### <Structure>

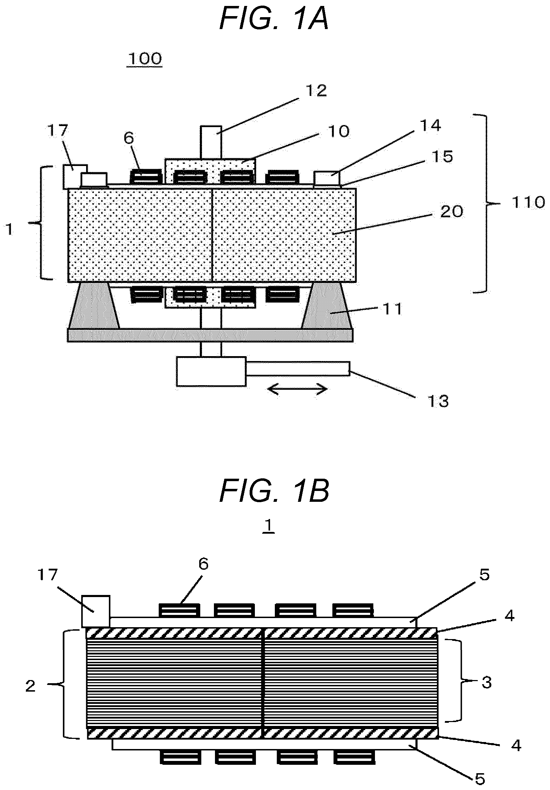

First, a configuration of compressor 100 according to the present exemplary embodiment will be described with reference to FIG. 1A. FIG. 1A is a side view of compressor 100 according to the present exemplary embodiment.

As illustrated in FIG. 1A, compressor 100 includes base 11, connecting rod 13, and motor 110. Base 11 may be for compressor 100 or for motor 110.

Motor 110 has stator 1 and rotor 10. Base 11 and bolt 14 may be included as the configuration elements of motor 110. There is resin layer 20 on the outer periphery.

Stator 1 is fixed to base 11 by bolts 14 (an example of a fastening mechanism). In the present exemplary embodiment (and the second and third exemplary embodiments which will be described later), a case where bolts are used as the fastening mechanism will be described as an example, but the fastening mechanism is not limited to the bolt.

Rotor 10 includes rotating shaft 12 at the center in the axial direction thereof, and is provided on base 11 so as to be rotatable around rotating shaft 12. Connecting rod 13 having a crank function is connected to rotating shaft 12, and the rotary motion of rotating shaft 12 is converted into a reciprocating motion in the direction (left-right direction in the drawing) indicated by the double-headed arrow.

Hereinafter, stator 1 and rotor 10 which are the configuration elements of motor 110 will be described in more detail.

### [Stator 1]

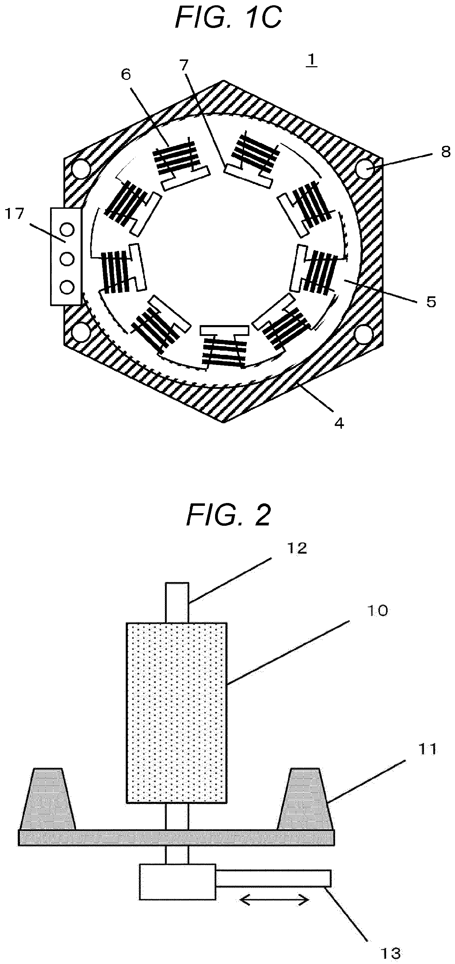

Stator 1 according to the present exemplary embodiment will be described with reference to FIGS. 1B and 1C. FIG. 1B is a side view of stator 1 according to the present exemplary embodiment. FIG. 1C is a top view of FIG. 1B.

As illustrated in FIG. 1B, stator 1 has laminated body 2 (iron core) in which the upper and lower sides of laminated group 3 of soft magnetic alloy strips are sandwiched between the soft magnetic electromagnetic steel sheets 4. As described above, the soft magnetic alloy strip is obtained by heat-treating and crystallizing the amorphous alloy strip.

Since laminated group 3 is easily damaged, electromagnetic steel sheet 4 has a role of protecting laminated group 3 from external forces such as fastening. However, electromagnetic steel sheet 4 is not an essential configuration element.

Insulating components 5 made of resin are provided above and below laminated body 2. Laminated body 2 is provided with terminal block 17. Terminal block 17 is a part that connects a lead wire (not illustrated) from an external power source and winding 6. For example, in a three-phase structure, terminal block 17 has three terminals.

Windings 6 are covered with a resin or the like in order to insulate windings 6 from each other when being energized. As illustrated in FIG. 1C, winding 6 is wound around each tooth 7 (projection part) having a salient pole structure formed on laminated body 2. Accordingly, laminated body 2 and insulating component 5 are tightened in the laminating direction (up-down direction in FIG. 1B). Each tooth 7 generates torque when driving motor 110.

As illustrated in FIG. 1C, stator 1 is provided with a plurality of through-holes 8 through which bolts 14 (refer to FIG. 1A) are inserted.

### [Rotor 10]

Rotor 10 is configured to include a permanent magnet and is attached to base 11 as illustrated in FIG. 2, for example. Specifically, rotor 10 is fixed to rotating shaft 12 attached to base 11. After assembling motor 110, rotor 10 is rotated by the magnetic force from stator 1.

As described above, the rotary motion of rotor 10 is converted into the reciprocating motion in the direction (left-right direction in the drawing) indicated by the double-headed arrow via connecting rod 13. For example, in a case where compressor 100 is used in a refrigerator, the reciprocating motion causes, for example, a low pressure or a high pressure of a refrigerant in the refrigerator, and the refrigerator can continuously create a low-temperature state by the refrigeration cycle.

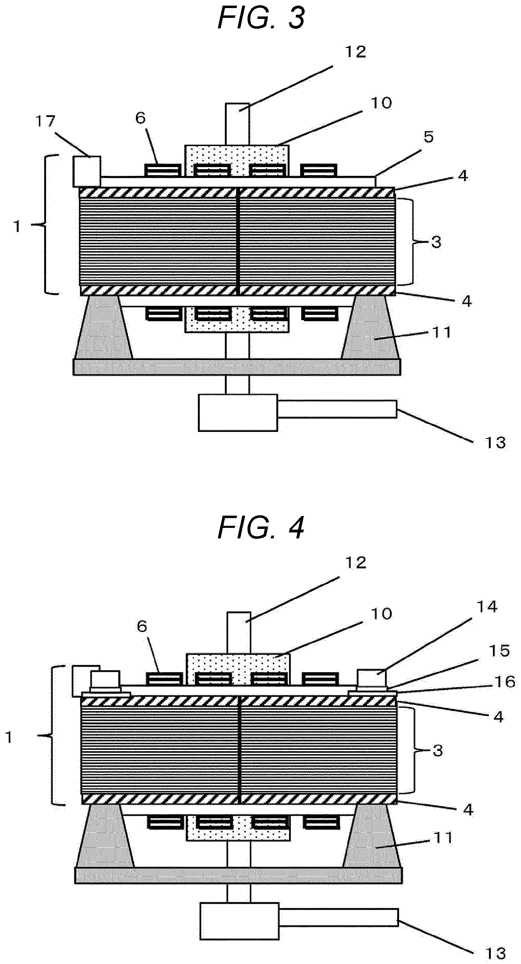

FIG. 3 is a side view illustrating a state where rotor 1 and stator 10 are attached to base 11. Rotor 10 is inserted into the inner diameter part (refer to FIG. 1C) of stator 1 and installed on base 11 as illustrated in FIG. 3.

FIG. 4 is a side view illustrating a state where stator 1 is fastened to base 11 in a state of FIG. 3. As illustrated in FIG. 4, bolt 14 is inserted into spring washer 15, washer 16, and through-hole 8 (refer to FIG. 1C, not illustrated in FIG. 4) and fastened to base 11.

### <Resin Coating Step>

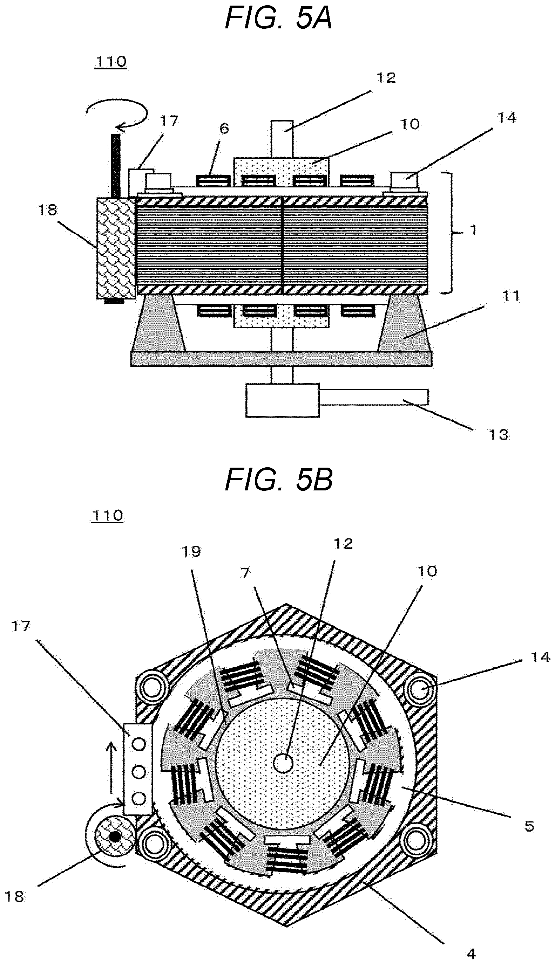

As described above, after stator 1 is fastened to base 11, the end surface of laminated body 2 closest to bolt 14 of stator 1 is coated with a resin. This step will be described with reference to FIGS. 5A and 5B. FIG. 5A is a side view illustrating a step of coating the laminated end surface of stator 1 with the resin. FIG. 5B is a top view of FIG. 5A.

In the present exemplary embodiment, for example, coating with a resin is performed after assembling motor 110 or after assembling stator 1. In general, coating with a resin is performed before assembling the motor or stator. However, in the present exemplary embodiment, stator 1 is formed by thin strip laminated body 2. Accordingly, when the assembly is performed after the resin is applied, the thin strip other than the resin-coated part may be bent, and there is a concern that not only the thin strip but also the resin is damaged. Accordingly, in the present exemplary embodiment, coating with a resin is performed after assembling motor 110 or stator 1.

Coating roller 18 impregnated with the resin is brought into contact with the laminated end surface of stator 1 fastened to base 11, and is moved along the laminated end surface while being rotated (refer to the arrows in FIGS. 5A and 5B). Accordingly, the laminated end surface of stator 1 is coated with the resin contained in coating roller 18.

As illustrated in FIG. 5B, a part of terminal block 17 protrudes from the laminated end surface, and at this part, coating is performed such that the upper end of coating roller 18 passes under terminal block 17.

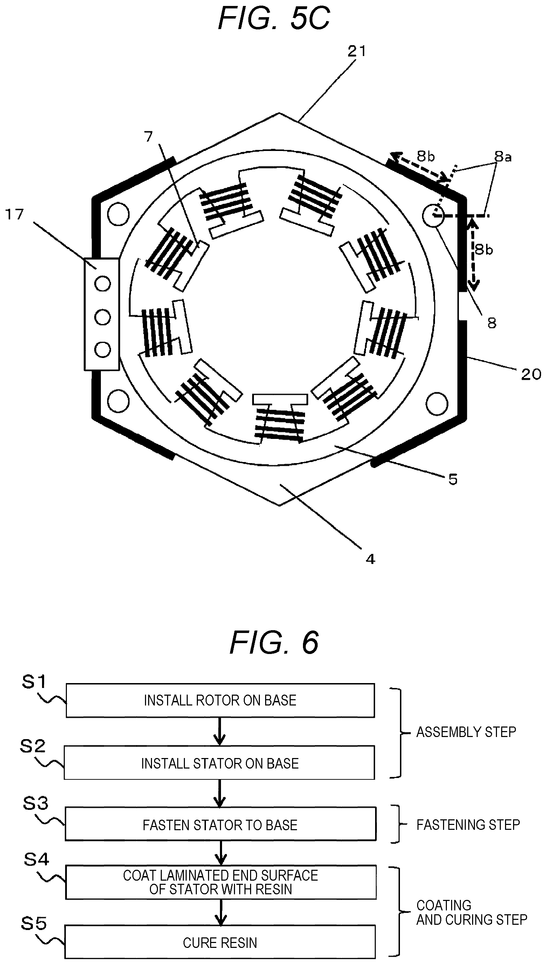

As described above with reference to FIGS. 18A to 18C, damage to laminated group 3 of soft magnetic alloy strips easily occurs in the vicinity of the fastener (bolt 14). Accordingly, resin layer 20 is formed at least on the end surface closest to bolt 14, on the end surface of laminated body 2. The region of resin layer 20 will be described with reference to FIG. 5C.

FIG. 5C is a plan view of the stator according to the first exemplary embodiment. In the range of resin layer 20, perpendicular line 8a is drawn from the center of through-hole 8 to the laminated end surface, and resin layer 20 is formed in region 8b at least three or more times the diameter of through-hole 8 along the outer periphery of the laminated end surface from the perpendicular line. Accordingly, resin layer 20 can protect the region where the stress generated by fastening is large and a damage easily occurs.

The end surface closest to bolt 14 is a surface where perpendicular line 8a intersects the laminated end surface.

Resin layer 20 may not be formed on the side surfaces other than the above. There is part 21 at which the resin layer is not provided on the side surface. Resin layers 20 may be present respectively at a plurality of necessary locations rather than being present on the entire periphery of the side surface, in terms of formation cost and stabilization of resin layer 20.

Since the exposed area of the root part of teeth 7 or winding 6 is small, the coating with a resin may not be performed.

The resin coating method may be a method other than the method using coating roller 18, but in a case where a spray or the like is used, for example, the resin enters gap 19 (refer to FIG. 5B) between stator 1 and rotor 10, and there is a concern that the rotation of rotor 10 is hindered. Accordingly, it is necessary to perform the coating with a resin so as to prevent the resin from entering an unnecessary part.

When the coating with a resin is completed, the resin is cured while stator 1 is fastened to base 11. Since the heat resistant temperature of the surfaces of insulating component 5 or winding 6 included in stator 1 is equal to or lower than 180 °C, the resin is cured at 180 °C or lower. Therefore, as the resin, for example, a room temperature curable resin or an ultraviolet curable resin can be used in addition to the thermosetting resin having a curing temperature of 180 °C or lower.

### <Manufacturing Method of Motor 110>

An example of the manufacturing method of motor 110 of the present exemplary embodiment will be described with reference to FIG. 6. FIG. 6 is a flow chart illustrating an example of a manufacturing method of motor 110.

As illustrated in FIG. 6, the manufacturing method of motor 110 includes assembly steps of steps S1 and S2, a fastening step of step S3, and coating and curing steps of steps S4 and S5.

In step S1, as illustrated in FIG. 2, rotor 10 is installed on base 11.

In step S2, as illustrated in FIG. 3, stator 1 is installed on base 11.

In step S3, as illustrated in FIG. 4, stator 1 is fastened to base 11 using bolts 14 and the like.

In step S4, as illustrated in FIGS. 5A and 5B, coating roller 18 is used to coat the laminated end surface of stator 1 with a resin.

In step S5, the resin applied to stator 1 is cured.

By the above-described steps, motor 110 of the present exemplary embodiment is manufactured.

Motor 110 manufactured in this manner is used, for example, in compressor 100 illustrated in FIG. 1A. When winding 6 of stator 1 is energized, as described above, rotor 10 illustrated in FIG. 2 and the like rotates, and connecting rod 13 performs a reciprocating motion.

### <Structure of Resin Layer>

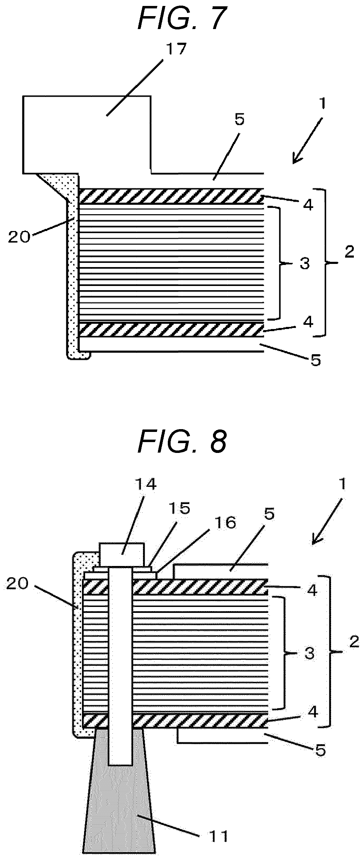

Resin layer 20 formed in steps S4 and S5 of FIG. 6 will be described with reference to FIGS. 7 and 8. FIG. 7 is a schematic view partially illustrating a cross section of the vicinity of terminal block 17 of stator 1. FIG. 8 is a schematic view partially illustrating a cross section of the vicinity of the fastener (bolt 14) of stator 1.

As illustrated in FIG. 7, resin layer 20 is in contact with not only the end surface of laminated body 2 but also insulating component 5 and terminal block 17. Resin layer 20 covers the end surfaces of each of laminated body 2 and insulating component 5. Accordingly, it is possible to prevent fragments or powder from being generated from the end surface of laminated group 3 and the boundary surface between electromagnetic steel sheet 4 and insulating component 5.

Since resin layer 20 is formed after fastening, resin layer 20 is not formed between the fastening mechanisms. Resin layer 20 covers the side surface of the fastening mechanism.

As illustrated in FIG. 8, resin layer 20 is in contact with not only the laminated end surface of laminated body 2 but also base 11, spring washer 15, washer 16, and bolt 14 (fastening mechanism). Resin 20 that reached bolt 14 from base 11 in this manner has an effect of preventing bolt 14 from loosening over time.

Electromagnetic steel sheet 4, insulating component 5, and terminal block 17 which are illustrated in FIG. 7 and electromagnetic steel sheet 4, spring washer 15, and washer 16 which are illustrated in FIG. 8 correspond to an example of "component laminated in laminated group 3".

The surface roughness (center line roughness Ra, the same will be applied hereinafter) of resin layer 20 after curing is equal to or less than 0.01 µm. In a case where bolt 14 is tightened after resin layer 20 is cured, as described above with reference to FIGS. 18A to 18C, laminated group 3 in the vicinity of bolt 14 is in a compressed state in the laminating direction. For example, in a case where the thickness of laminated group 3 is 30 mm, the thickness of laminated group 3 may be reduced by 1 mm or greater due to the above-described compression. In this case, there is also a case where a damage (for example, cracks or breaks) occurs in resin layer 20, and fragments or powder are generated from the surface of resin layer 20. The surface roughness of resin layer 20 damaged in this manner is a value considerably greater than 0.01 pm and can be confirmed with the naked eye. Accordingly, it is easy to distinguish between this case and resin layer 20 of the present exemplary embodiment having a surface roughness of 0.01 pm or less.

### <Effect>

In the present exemplary embodiment, after stator 1 is fastened to base 11 by bolt 14, in the laminated end surface of stator 1, at least the laminated end surface (the laminated end surface closest to bolt 14) at which fragments or powder are most likely to be generated is coated with a resin, and the resin is cured. Accordingly, it is possible to prevent fragments or powder from coming out of stator 1 from the laminated end surface. Therefore, the characteristics and reliability of compressor 100 and motor 110 can be secured. It is more preferable to coat the surface other than the laminated end surface where fragments or powder are most likely to be generated, with a resin.

### (Second Exemplary Embodiment)

A second exemplary embodiment according to the present disclosure will be described.

### <Resin Coating Step>

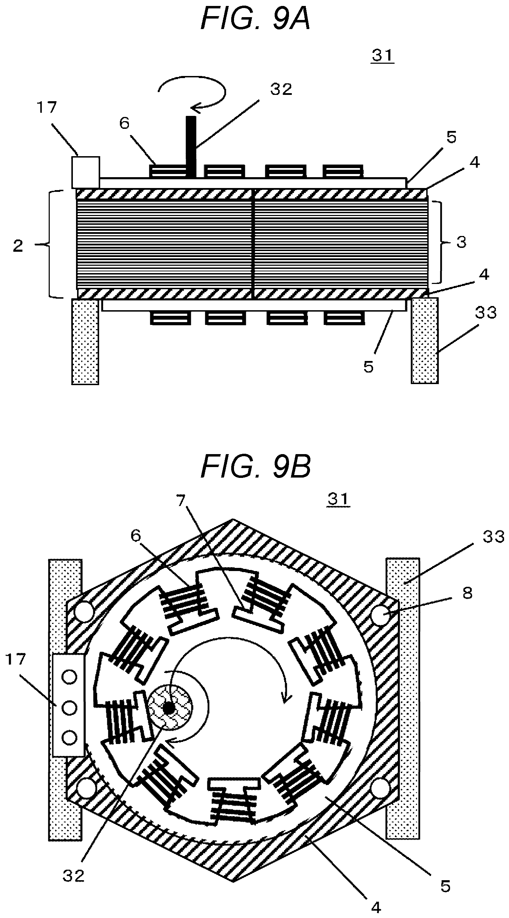

In the first exemplary embodiment, a case where the outer peripheral surface (an example of the laminated end surface) of stator 1 is coated with a resin has been described as an example, but in teeth 7 illustrated in FIGS. 1C or 5B, the end surface (an example of the laminated end surface) on the inner diameter portion facing rotor 10 may also be coated with a resin. Hereinafter, stator 31 according to the present exemplary embodiment will be described with reference to FIGS. 9A and 9B. FIG. 9A is a side view of stator 31 according to the present exemplary embodiment. FIG. 9B is a top view of FIG. 9A.

The present exemplary embodiment is the same as the first exemplary embodiment except that the end surfaces of teeth 7 are coated with a resin (refer to FIG. 1C).

Stator 31 is installed on holding stand 33, and coating roller 32 impregnated with the resin is brought into contact with the end surface of predetermined tooth 7 and moved while being rotated along the end surfaces of each tooth 7 (refer to arrows in FIGS. 9A and 9B). Accordingly, the end surfaces of each tooth 7 are coated with a resin contained in coating roller 32.

The resin coating method may be a method other than the method using coating roller 32, but in a case where a spray or the like is used, for example, the resin enters unshielded through-hole 8 and the insertion of bolt 14 is hindered. It is necessary to prevent a part other than the end surfaces of the teeth 7 (for example, the laminated end surface of stator 1) from being coated with the resin. The curing of the resin applied to teeth 7 is the same as that in the first exemplary embodiment.

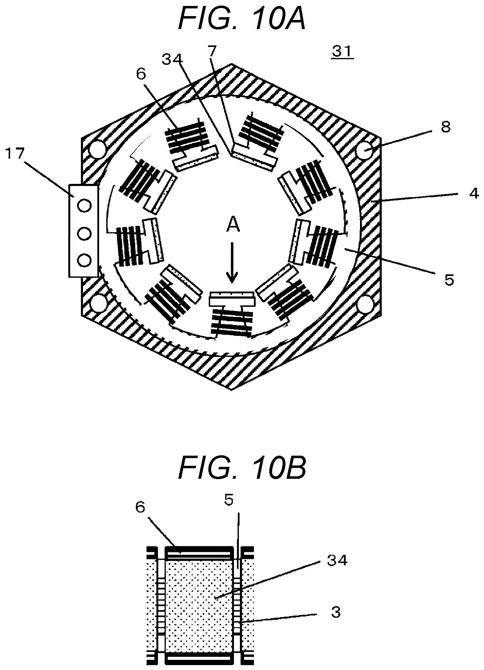

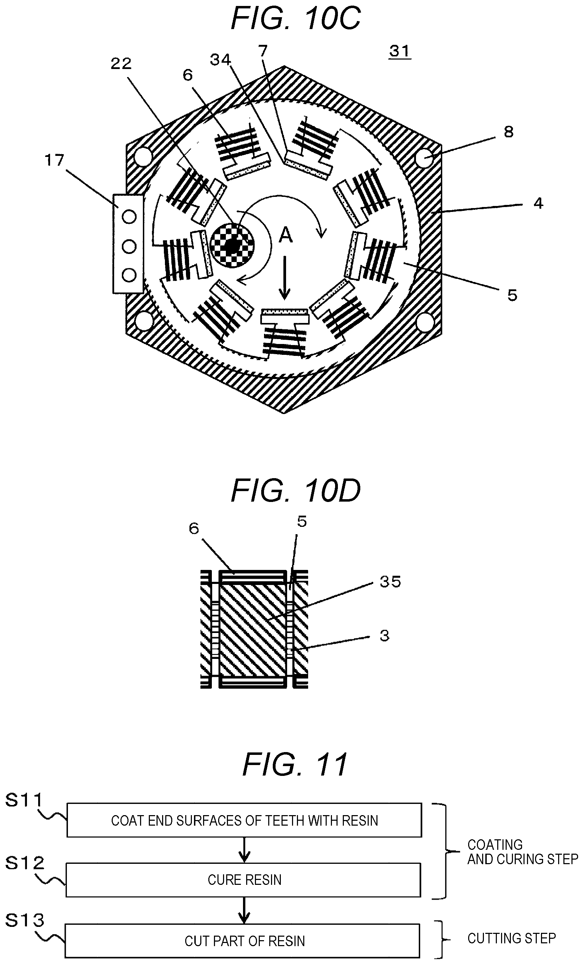

Stator 1 after the resin applied to teeth 7 is cured will be described with reference to FIGS. 10A to 10D. FIG. 10A is a top view of stator 31 in which resin layer 34 is formed on the end surface of teeth 7. FIG. 10B is a side view seen in the direction of an arrow from position A illustrated FIG. 10A. FIG. 10C is a top view illustrating a state where resin layer 34 is cut. FIG. 10D is a side view after resin layer 34 illustrated in FIG. 10B is cut.

As illustrated in FIGS. 10A and 10B, resin layer 34 is formed on the end surfaces of each tooth 7. In this manner, by forming resin layer 34 on the end surface of each tooth 7, in a case where fragments or powder are generated in the vicinity of the end surface of tooth 7, it is possible to prevent the fragments or powder from entering gap 19 (refer to FIG. 5B) between stator 1 and rotor 10.

In order to eliminate unevenness in the thickness of resin layer 34, as illustrated in FIG. 10C, resin layer 34 on the end surfaces of teeth 7 is removed by a cutting tool that rotates as illustrated by an arrow. By this cutting, as illustrated in FIG. 10D, resin layer 35 remains as a cutting mark. At this time, when the center of rotation of the cutting tool is made to move in a circular motion as illustrated by the arrow, the thickness of resin layer 35 is not constant, but the gap (clearance) with rotor 10 entering the inside becomes constant, and the effect that the rotation of rotor 10 becomes smoother can also be obtained. After cutting, removal is performed such that the cutting powder does not remain.

The thickness of resin layer 34 is within the range of 10 pm to 100 pm. Although the design value matters, gap 19 will not be blocked with this thickness, and when the thickness of resin layer 34 is uneven, there is a concern that rotor 10 cannot rotate smoothly due to fluctuations in air resistance. Therefore, a part of resin layer 34 may be cut in order to eliminate unevenness in thickness. By this cutting, as illustrated in FIG. 10D, resin layer 35 as a cutting mark remains.

As described above, the thickness of resin layer 34 is within the range of 10 pm to 100 µm, and thus, in order to perform cutting such that resin layer 35 remains, it is preferable that the cutting is performed such that the surface roughness of resin layer 35 is equal to or less than 5 pm.

It is preferable that the cutting marks have no directionality. By combining the cutting edge shape of the cutting tool, the rotary motion, the vertical motion and the like, the cutting marks can be made into a cross shape or a spiral shape, and the directionality can be eliminated.

When a part of resin layer 34 is cut, resin layer 35 having at least a surface roughness of 0.01 pm or greater remains. It is preferable that the unevenness of resin layer 35 has no directionality such that the directionality or the like of the air resistance does not affect the rotation of rotor 10.

### <Manufacturing Method of Stator 31>

An example of the manufacturing method of stator 31 according to the present exemplary embodiment will be described with reference to FIG. 11. FIG. 11 is a flow chart illustrating an example of the manufacturing method of stator 31.

As illustrated in FIG. 11, the manufacturing method of stator 31 includes coating and curing steps of steps S11 and S12 and a cutting step of step S13.

In step S11, as illustrated in FIGS. 9A and 9B, the end surfaces of each tooth 7 are coated with a resin by using coating roller 32.

In step S12, the resin applied to the end surfaces of each tooth 7 is cured.

In step S13, a part of resin layer 34 illustrated in FIGS. 10A and 10B is cut. Accordingly, as illustrated in FIG. 10C, resin layer 35 as a cutting mark remains on the end surfaces of each tooth 7.

By the above-described steps, stator 31 according to the present exemplary embodiment is manufactured. The step S13 (cutting step) may be performed as needed.

After step S13, the motor can be manufactured by performing steps S1 to S5 illustrated in FIG. 6 using manufactured stator 31.

Resin layer 35 is preferably only a flat part at the tip ends of teeth 7.

### (Third Exemplary Embodiment)

A third exemplary embodiment according to the present disclosure will be described. The parts that are not described are the same as those in the first and second exemplary embodiments.

### <Structure of Stator>

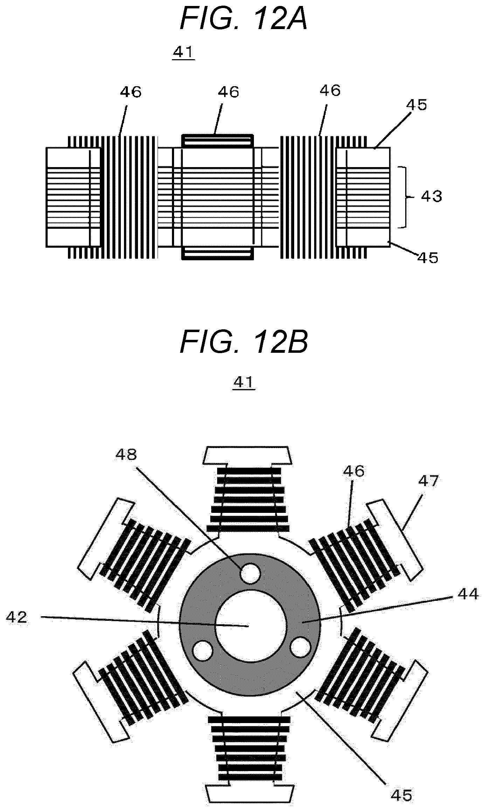

Hereinafter, stator 41 according to the present exemplary embodiment will be described with reference to FIGS. 12A and 12B. FIG. 12A is a side view of stator 41 according to the present exemplary embodiment. FIG. 12B is a top view of FIG. 12A.

As illustrated in FIGS. 12A and 12B, stator 41 is provided with teeth 47 around which winding 46 is wound so as to protrude toward the outer peripheral side. In stator 41, through-hole 48 through which a fastening bolt is inserted is provided on the inner diameter side (through-hole 42 side) of teeth 47.

The structure of stator 41 in the laminating direction is the same as that of stator 1 of the first exemplary embodiment or stator 31 of the second exemplary embodiment. As illustrated in FIG. 12A, laminated group 43 of soft magnetic alloy strips is sandwiched between electromagnetic steel sheets 44. In FIG. 12A, electromagnetic steel sheet 44 is not illustrated because the periphery thereof is covered with resin insulating component 45 (refer to FIG. 12B).

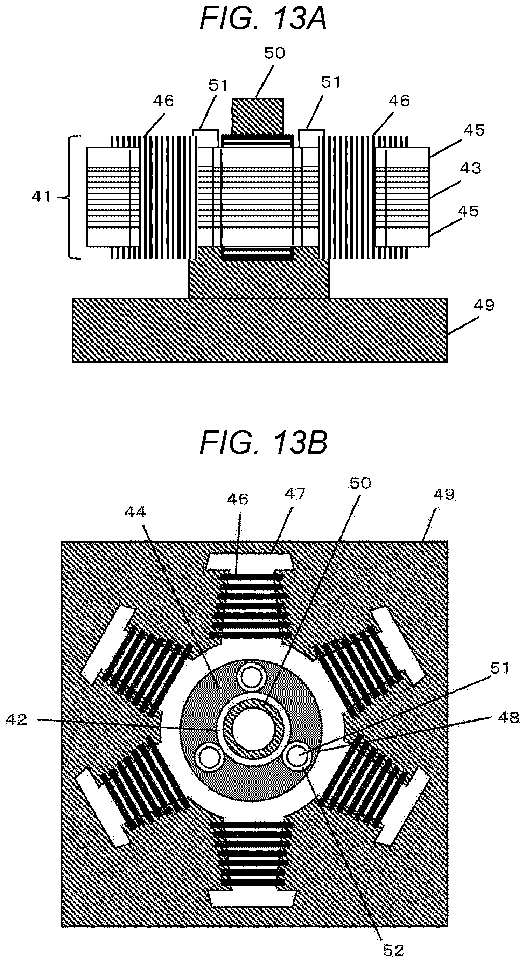

Stator 41 described above is fastened to the base as in the first and second exemplary embodiments. FIG. 13A is a side view of stator 41 fastened to base 49. FIG. 13B is a top view of FIG. 13A.

Base 49 illustrated in FIGS. 13A and 13B is a base for a compressor or a motor. First, shaft 50 of base 49 is inserted into through-hole 42 illustrated in FIG. 13B, and stator 41 is installed on base 49. Next, bolt 51 (an example of a fastening mechanism) is inserted into each through-hole 48 illustrated in FIG. 12B via spring washer 52, and bolt 51 is fastened to base 49. Each through-hole 48 is a hole that penetrates laminated group 43 of soft magnetic alloy strips and electromagnetic steel sheet 44 that sandwiches laminated group 43.

### <Resin Coating Step>

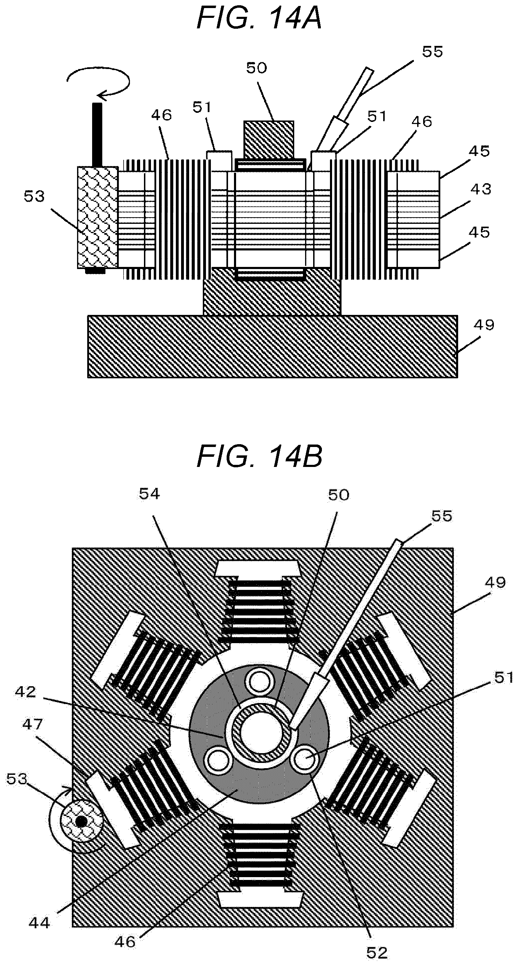

The method of coating stator 41 described above with a resin will be described with reference to FIGS. 14A and 14B. FIG. 14A is a side view of a step of coating the laminated end surface of stator 41 with a resin. FIG. 14B is a top view of FIG. 14A. In the present exemplary embodiment, the end surfaces of teeth 47 correspond to the laminated end surface of stator 41.

Stator 41 is fastened to base 49, and coating roller 53 impregnated with the resin is brought into contact with the laminated end surface of predetermined tooth 47 and moved while being rotated along the end surfaces of each tooth 47 (refer to arrows in FIGS. 14A and 14B). Accordingly, the laminated end surfaces of each tooth 47 are coated with the resin contained in coating roller 53.

As described above with reference to FIGS. 18A to 18C, a damage to laminated group 43 of soft magnetic alloy strips easily occurs in the vicinity of the fastener. Accordingly, at least the inner diameter portion closest to bolt 51 is coated with a resin. Since there is gap 54 (refer to FIG. 14B) between the end surface of laminated body 2 of through-hole 42 having the inner diameter portion closest to bolt 51 and shaft 50, the resin is injected into gap 54 by injector 55. Accordingly, not only the laminated end surface is covered with a resin, but at least the surface of gap 54 is sealed, and thus, even when fragments or powder are generated from the soft magnetic alloy strips, it is possible to prevent the fragments or powder from coming out of stator 41. The curing of the resin applied to teeth 47 and the resin injected into gap 54 is the same as those in the first and second exemplary embodiments.

### <Stator 41 after Resin Curing>

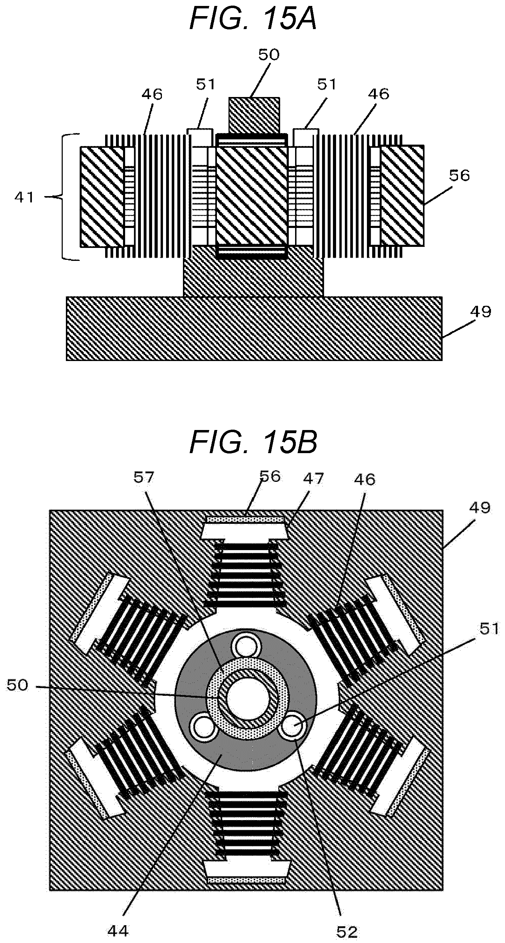

Stator 41 after the applied resin is cured as described above will be described with reference to FIGS. 15A and 15B. FIG. 15A is a side view of stator 41 after the resin is cured. FIG. 15B is a top view of FIG. 15A.

In FIG. 15A, resin layer 56 formed on the end surfaces of each tooth 47 is cut such that the surface roughness after curing becomes 0.01 pm or greater and 5 pm or less. It is preferable that the unevenness of resin layer 56 has no directionality.

In FIG. 15B, resin layer 57 injected into gap 54 and cured slightly overflows on the surface of electromagnetic steel sheet 44 and reaches spring washer 52 or bolt 51. This has the effect of preventing bolt 51 and the like from loosening over time, as described above with reference to FIG. 8.

### <Motor 120>

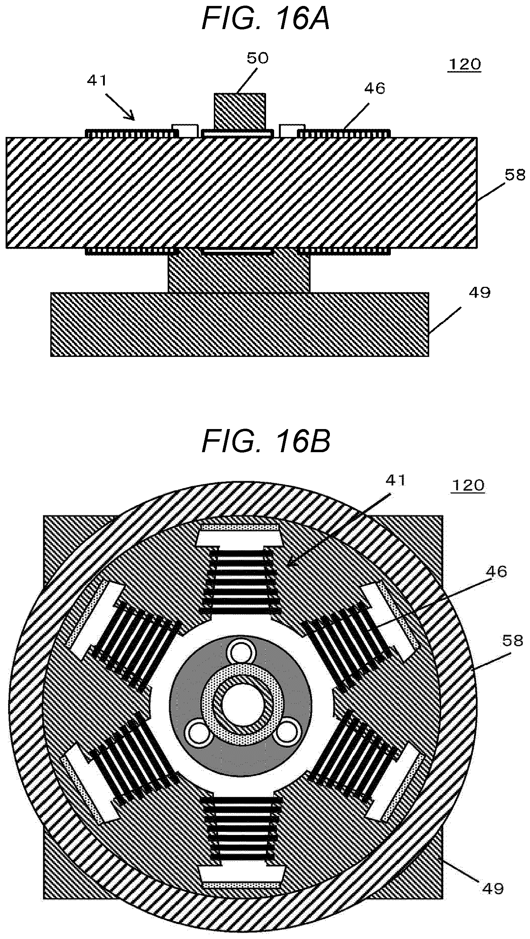

Motor 120 can be manufactured by attaching rotor 58 to base 49 to which stator 41 illustrated in FIGS. 15A and 15B is attached. FIG. 16A is a side view of motor 120. FIG. 16B is a top view of FIG. 16A.

As illustrated in FIGS. 16A and 16B, rotor 58 is provided so as to surround stator 41 attached to base 49. When winding 46 of stator 41 is energized, rotor 58 rotates and motor 120 is driven.

### <Manufacturing Method of Motor 120>

An example of the manufacturing method of motor 120 of the present exemplary embodiment will be described with reference to FIG. 17. FIG. 17 is a flow chart illustrating an example of the manufacturing method of motor 120.

As illustrated in FIG. 17, the manufacturing method of motor 120 includes a first assembly step of step S21, a fastening step of step S22, a coating and curing step of steps S23 and S24, a cutting step of step S25, and a second assembly step of step S26.

In step S21, as illustrated in FIGS. 13A and 13B, stator 41 is installed on base 49.

In step S22, as illustrated in FIGS. 13A and 13B, stator 41 is fastened to base 49 using bolts 51 and the like.

In step S23, the resin is injected into gap 54 illustrated in FIG. 14B. As illustrated in FIGS. 14A and 14B, the end surfaces of each tooth 47 are coated with a resin by using coating roller 53.

In step S24, the resin injected into gap 54 and the resin applied to the end surfaces of each tooth 47 are cured.

In step S25, a part of the resin applied to the end surfaces of each tooth 47 is cut. Accordingly, as illustrated in FIGS. 15A and 15B, resin layer 56 as a cutting mark remains.

In step S26, rotor 58 is installed on base 49 as illustrated in FIGS. 16A and 16B.

By the above-described steps, motor 120 of the present exemplary embodiment is manufactured. The step S25 (cutting step) may be performed as needed.

The present disclosure is not limited to the description of the above-described exemplary embodiments, and various modifications can be made without departing from the spirit of the present disclosure.

### INDUSTRIAL APPLICABILITY

According to the stator, the motor, the compressor, and the manufacturing method thereof of the present disclosure, the characteristics and reliability of the motor and the compressor on which the motor is mounted can be secured. Furthermore, the stator of the present disclosure can be applied not only to motors but also to applications of magnetically applied electronic components such as transformers.

### REFERENCE MARKS IN THE DRAWINGS

- 1, 31, 41: stator
- 2: laminated body
- 3, 43, 61: laminated group of soft magnetic alloy strips
- 4, 44: electromagnetic steel sheet
- 5, 45: insulating component
- 6, 46: winding
- 7, 47: teeth
- 8, 42, 48, 65: through-hole
- 10, 58: rotor
- 11, 49, 64: base
- 12: rotating shaft
- 13: connecting rod
- 14, 51, 62: bolt
- 15, 52: spring washer
- 16, 63: washer
- 17: terminal block
- 18, 32, 53: coating roller
- 19, 54, 68: gap
- 20, 34, 35, 56, 57: resin layer
- 21: part where resin layer is not provided
- 22: cutting tool
- 33: holding stand
- 50: shaft
- 55: injector
- 66: soft magnetic alloy strip
- 67: deformed part
- 100: compressor
- 110,120: motor

## Claims

1. A motor comprising:
a stator that includes a laminated group of soft magnetic alloy strips that are laminated and is fastened to a base by a fastening mechanism that penetrates the laminated group in a direction of laminating the soft magnetic alloy strips;
a rotor that is rotatably installed on the base; and
a resin layer provided at least on a laminated end surface closest to the fastening mechanism, in the laminated end surface of the stator.

2. The motor of Claim 1, wherein
a surface roughness of the resin layer is equal to or less than 0.01 pm.

3. The motor of Claim 1, wherein
the resin layer is in contact with a component laminated on the laminated group.

4. The motor of Claim 1, wherein
the resin layer is in contact with the fastening mechanism.

5. The motor of Claim 1, wherein
a part where the resin layer is not provided is present on the laminated end surface.

6. The motor of Claim 1, wherein
the resin layer has a cutting mark.

7. The motor of Claim 6, wherein
a surface roughness of the cutting mark is 0.01 pm or greater and 5 pm or less.

8. The motor of Claim 6, wherein
a direction of unevenness of the cutting mark has no directionality.

9. A compressor comprising:
the motor of Claim 1.

10. A motor manufacturing method comprising:
a fastening step of fastening a stator including a laminated group of soft magnetic alloy strips that are laminated to a base; and
a first coating and curing step of coating a laminated end surface of the stator with a resin and curing the resin.

11. The motor manufacturing method of Claim 10, further comprising:
an assembly step of installing a rotor on the base before the fastening step.

12. The motor manufacturing method of Claim 10, further comprising:
a second coating and curing step of coating an end surface of a tooth around which a winding is wound in the stator with a resin and curing the resin.

13. The motor manufacturing method of Claim 12, further comprising:
a cutting step of cutting a part of the resin formed in the second coating and curing step.

14. The motor manufacturing method of Claim 12, wherein
a temperature at which the resin is cured in the second coating and curing step is equal to or lower than 180 °C.

15. The motor manufacturing method of Claim 10, further comprising:
an assembly step of installing a rotor on the base after the first coating and curing step.

16. The motor manufacturing method of Claim 10, further comprising:
a cutting step of cutting a part of the resin formed in the first coating and curing step.

17. The motor manufacturing method of Claim 10, wherein
a temperature at which the resin is cured in the first coating and curing step is equal to or lower than 180 °C.
